# EUROPEAN PATENT APPLICATION

(11) **EP 3 438 136 A1**
(43) Date of publication of application: **06.02.2019**
(21) Application number: 17774787.0
(22) Date of filing: 24.03.2017
(51) Int. Cl.: C08F 4/00, C08F 2/16, C08F 236/04

(54) **METHOD FOR PRODUCING COPOLYMER, AND METHOD FOR PRODUCING LATEX**

(30) Priority: 31.03.2016 JP 2016070961
(71) Applicant: Zeon Corporation, Tokyo 100-8246 (JP)
(72) Inventor: BANDO Fumiaki, Tokyo 100-8246 (JP)
(74) Representative: Beckmann, Claus
(86) International application number: PCT/JP2017/012091
(87) International publication number: WO 2017/170250

(57) **Abstract**

The invention is a method for producing a copolymer having a repeating unit derived from a conjugated diene-based monomer and using a radical polymerization initiator and a radical generator,
wherein the radical polymerization initiator is a compound represented by specific formula (1), and
a method for producing a latex in which a copolymer particle is dispersed in water,
wherein the copolymer having the repeating unit derived from the conjugated diene-based monomer is synthesized by the method for producing the copolymer.

Aspects of the invention provide a method for producing a copolymer in which by-products by Diels-Alder reaction are not readily generated in a copolymerization reaction between a conjugated diene-based monomer and a radically polymerizable monomer other than conjugated diene-based monomers, and a method for producing a latex using this method.

## Description

### TECHNICAL FIELD

The present invention relates to a method for producing a copolymer in which by-products by Diels-Alder reaction are not readily generated in a copolymerization reaction between a conjugated diene-based monomer and a radically polymerizable monomer other than conjugated diene-based monomers, and a method for producing a latex using this method.

### BACKGROUND ART

In recent years, methods for radically polymerizing a vinyl-based monomer and using an organotellurium compound as a radical polymerization initiator have been known.

For example, Patent Literature 1 describes a method for producing a polymer having a double bond at the molecular terminal by polymerizing a radically polymerizable monomer and using a specific organotellurium compound as a radical polymerization initiator.

### CITATION LIST

### PATENT LITERATURE

Patent Literature 1: WO 2015/080189 (US 2016/0297755 A1)

### SUMMARY OF INVENTION

### TECHNICAL PROBLEM

In accordance with the examination by the present inventors, it has been found that when copolymerization reaction between a conjugated diene-based monomer and a radically polymerizable monomer other than conjugated diene-based monomers is carried out using an organotellurium compound as a radical polymerization initiator, a Diels-Alder reaction occurs as a side reaction and a desired copolymer cannot be synthesized in high purity in some cases.

The present invention has been made to solve this problem. That is, aspects of the invention provide a method for producing a copolymer in which by-products by Diels-Alder reaction are not readily generated in a copolymerization reaction between a conjugated diene-based monomer and a radically polymerizable monomer other than conjugated diene-based monomers, and a method for producing a latex using this method.

### SOLUTION TO PROBLEM

In order to solve the above problems, the inventors conducted extensive studies with regard to a copolymerization reaction between a conjugated diene-based monomer and a radically polymerizable monomer other than conjugated diene-based monomers using an organotellurium compound as a radical polymerization initiator. As a result, the inventors have found that the amount of by-products by Diels-Alder reaction can be reduced by carrying out this copolymerization reaction in accordance with an emulsion polymerization method or a suspension polymerization method, and this finding has led to the completion of the invention.

Thus, aspects of the invention provide methods for producing copolymers according to [1] to [6], and a method for producing a latex according to [7], described below.
[1] A method for producing a copolymer having a repeating unit derived from a conjugated diene-based monomer and using a radical polymerization initiator and a radical generator, wherein the radical polymerization initiator is a compound represented by formula (1): 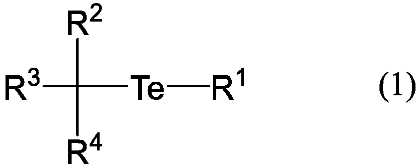 (wherein R¹ represents an alkyl group, an unsubstituted or substituted aryl group or an unsubstituted or substituted aromatic heterocyclic group. Each of R² and R³ independently represents a hydrogen atom or an alkyl group. R⁴ represents an unsubstituted or substituted vinyl group, an unsubstituted or substituted aryl group, an unsubstituted or substituted aromatic heterocyclic group, an acyl group, a hydrocarbyloxycarbonyl group, or a cyano group.), and wherein emulsion polymerization or suspension polymerization between the conjugated diene-based monomer and a radically polymerizable monomer other than conjugated diene-based monomers is carried out.
[2] The method for producing the copolymer according to [1], having the repeating unit derived from the conjugated diene-based monomer and using the radical polymerization initiator and the radical generator, wherein the radical polymerization initiator is the compound represented by formula (1), and wherein emulsion polymerization or suspension polymerization of the radically polymerizable monomer other than conjugated diene-based monomers is carried out, and then emulsion polymerization or suspension polymerization between the conjugated diene-based monomer and the radically polymerizable monomer other than conjugated diene-based monomers is carried out in the reaction system.
[3] A method for producing a copolymer having a repeating unit derived from a conjugated diene-based monomer and using a macroradical polymerization initiator and a radical generator, wherein the macroradical polymerization initiator is a compound represented by formula (2): 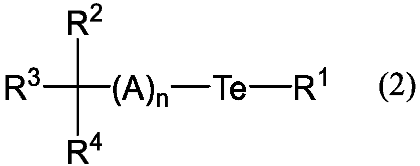 (wherein R¹ represents an alkyl group, an unsubstituted or substituted aryl group or an unsubstituted or substituted aromatic heterocyclic group. Each of R² and R³ independently represents a hydrogen atom or an alkyl group. R⁴ represents an unsubstituted or substituted vinyl group, an unsubstituted or substituted aryl group, an unsubstituted or substituted aromatic heterocyclic group, an acyl group, a hydrocarbyloxycarbonyl group, or a cyano group. A represents a repeating unit derived from a hydrophilic monomer. n represents an integer of 1 to 100), and wherein emulsion polymerization or suspension polymerization between the conjugated diene-based monomer and the radically polymerizable monomer other than conjugated diene-based monomers is carried out.
[4] The method for producing the copolymer according to [3] having the repeating unit derived from the conjugated diene-based monomer and using the macroradical polymerization initiator and the radical generator, wherein the macroradical polymerization initiator is the compound represented by formula (2), and wherein emulsion polymerization or suspension polymerization of the radically polymerizable monomer other than conjugated diene-based monomers is carried out, and then, emulsion polymerization or suspension polymerization between the conjugated diene-based monomer and the radically polymerizable monomer other than conjugated diene-based monomers is carried out in the reaction system.
[5] The method for producing the copolymer according to [3] or [4], wherein the macroradical polymerization initiator represented by formula (2) can be obtained by reacting a hydrophilic monomer with a compound represented by formula (1): 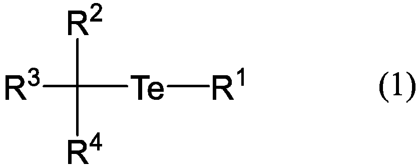 (wherein R¹ represents an alkyl group, an unsubstituted or substituted aryl group or an unsubstituted or substituted aromatic heterocyclic group. Each of R² and R³ independently represents a hydrogen atom or an alkyl group. R⁴ represents an unsubstituted or substituted vinyl group, an unsubstituted or substituted aryl group, an unsubstituted or substituted aromatic heterocyclic group, an acyl group, a hydrocarbyloxycarbonyl group, or a cyano group.).
[6] The method for producing the copolymer according to any one of [1] to [5], wherein the polymerization reaction system further includes a ditelluride compound represented by formula (3):

   **R⁵-Te-Te-R⁶** **(3)**

   (wherein each of R⁵ and R⁶ independently represents an alkyl group, an unsubstituted or substituted aryl group or an unsubstituted or substituted aromatic heterocyclic group.).
[7] A method for producing a latex in which a copolymer particle is dispersed in water, according to any one of [1] to [6], wherein the copolymer having the repeating unit derived from the conjugated diene-based monomer is synthesized by the method.

### ADVANTAGEOUS EFFECTS OF INVENTION

Aspects of the invention provide a method for producing a copolymer in which by-products by Diels-Alder reaction are not readily generated in a copolymerization reaction between a conjugated diene-based monomer and a radically polymerizable monomer other than conjugated diene-based monomers, and a method for producing a latex using this method.

### DESCRIPTION OF EMBODIMENTS

The method for producing the copolymer according to one embodiment of the invention is a method for producing a copolymer having a repeating unit derived from a conjugated diene-based monomer, and relates to the following production method (I) or (II).

Production method (I): A method for producing a copolymer having a repeating unit derived from a conjugated diene-based monomer and using a radical polymerization initiator and a radical generator, and a method for producing a copolymer wherein the radical polymerization initiator is a compound represented by the above-described formula (1), and wherein emulsion polymerization or suspension polymerization between the conjugated diene-based monomer and a radically polymerizable monomer (hereinafter, referred to as "radically polymerizable monomer (α)" in some cases) other than conjugated diene-based monomers is carried out.

In accordance with the production method (I), a random copolymer, a block copolymer or the like can be obtained, because the binding manner of each monomer can be various binding manners such as a block manner and a random manner.

Production method (II): A method for producing a copolymer having a repeating unit derived from a conjugated diene-based monomer and using a macroradical polymerization initiator and a radical generator, wherein the macroradical polymerization initiator is a compound represented by the above-described formula (2), and wherein emulsion polymerization or suspension polymerization between the conjugated diene-based monomer and the radically polymerizable monomer (α) is carried out.

In accordance with the production method (II), a random copolymer, a block copolymer or the like can be obtained, because the binding manner of each monomer can be various binding manners such as a block manner and a random manner.

### [Compound represented by formula (1)]

The organotellurium compound represented by the following formula (1) is used as a radical polymerization initiator in the production method (I). In addition, this organotellurium compound is preferably used as a precursor of the macroradical polymerization initiator in the production method (II), as described below. 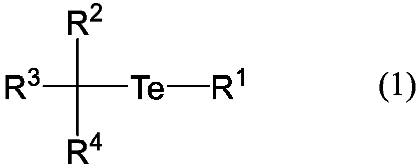 (wherein R¹ represents an alkyl group, an unsubstituted or substituted aryl group or an unsubstituted or substituted aromatic heterocyclic group. Each of R² and R³ independently represents a hydrogen atom or an alkyl group. R⁴ represents an unsubstituted or substituted vinyl group, an unsubstituted or substituted aryl group, an unsubstituted or substituted aromatic heterocyclic group, an acyl group, a hydrocarbyloxycarbonyl group, or a cyano group.)

The number of carbon atoms in the alkyl group represented by R¹ is preferably 1 to 10, and more preferably 1 to 5.

Examples of the alkyl group represented by R¹ include a linear alkyl group such as a methyl group, an ethyl group, an n-propyl group, an n-butyl group, an n-pentyl group, an n-hexyl group, an n-heptyl group, an n-octyl group, an n-nonyl group and an n-decyl group; a branched alkyl group such as an isopropyl group, a sec-butyl group and a tert-butyl group; a cycloalkyl group such as a cyclopropyl group, a cyclobutyl group, a cyclopentyl group and a cyclohexyl group; and the like.

The number of carbon atoms in the unsubstituted or substituted aryl group represented by R¹ is preferably from 6 to 20, and more preferably from 6 to 15.

Examples of the unsubstituted aryl group represented by R¹ include a phenyl group, a 1-naphthyl group, a 2-naphthyl group, an anthranil group, and the like.

The substituent of the substituted aryl group represented by R¹ is not particularly limited as long as it does not interfere with the copolymerization reaction. Examples thereof include a halogen atom such as a fluorine atom, a chlorine atom, a bromine atom and an iodine atom; a hydroxyl group; an alkyl group having 1 to 8 carbon atoms such as a methyl group, an ethyl group, an n-propyl group, an isopropyl group, a cyclopropyl group, a cyclobutyl group and a cyclopentyl group; an alkoxy group having 1 to 8 carbon atoms such as a methoxy group and an ethoxy group; an amino group; a nitro group; a cyano group; a group represented by -CORa (wherein Ra is an alkyl group having 1 to 8 carbon atoms such as a methyl group, an ethyl group, an n-propyl group and an isopropyl group; an aryl group having 6 to 10 carbon atoms such as a phenyl group, a 1-naphthyl group and a 2-naphthyl group; an alkoxy group having 1 to 8 carbon atoms such as a methoxy group and an ethoxy group; an aryloxy group having 6 to 10 carbon atoms that may have a substituent, such as a phenoxy group and a 2,4,6-trimethylphenyloxy group; a haloalkyl group having 1 to 8 carbon atoms such as a trifluoromethyl group; and the like.

The number of carbon atoms in the unsubstituted or substituted aromatic heterocyclic group represented by R¹ is preferably 1 to 15, and more preferably 3 to 15.

Examples of the unsubstituted aromatic heterocyclic group represented by R¹ include a 5-membered aromatic heterocyclic group such as a pyrrolyl group, an imidazolyl group, a furyl group, a thienyl group, an oxazolyl group and a thiazolyl group; a 6-membered aromatic heterocyclic group such as a pyridyl group, a pyrimidyl group, a pyridazyl group and a pyrazinyl group; a fused aromatic heterocyclic group such as a benzimidazolyl group, a quinolyl group and a benzofuranyl group; and the like.

The substituent of the substituted aromatic heterocyclic group represented by R¹ is not particularly limited as long as it does not interfere with the copolymerization reaction. Examples of such a substituent include the same groups as cited for the substituent of the substituted aryl group represented by R¹.

The number of carbon atoms in the alkyl groups represented by R² and R³ is preferably 1 to 10, and more preferably 1 to 5.

Examples of the alkyl groups represented by R² and R³ include the same groups as cited for the alkyl group represented by R¹.

The number of carbon atoms in the unsubstituted or substituted vinyl group represented by R⁴ is preferably 2 to 15 and more preferably 2 to 10.

The substituent of the substituted vinyl group represented by R⁴ is not particularly limited as long as it does not interfere with the copolymerization reaction. Examples of such a substituent include the same groups as cited for the substituent of the substituted aryl group represented by R¹.

The number of carbon atoms in the unsubstituted or substituted aryl group represented by R⁴ is preferably 6 to 20, and more preferably 6 to 15.

Examples of the unsubstituted or substituted aryl group represented by R⁴ include the same groups as cited for the unsubstituted or substituted aryl group represented by R¹.

The number of carbon atoms in the unsubstituted or substituted aromatic heterocyclic group represented by R⁴ is preferably 1 to 15, and more preferably 3 to 15.

Examples of the unsubstituted or substituted aromatic heterocyclic group represented by R⁴ include the same groups as cited for the unsubstituted or substituted aromatic heterocyclic group represented by R¹.

The number of carbon atoms in the acyl group represented by R⁴ is preferably 1 to 10, and more preferably 1 to 5.

Examples of the acyl group represented by R⁴ include a formyl group, an acetyl group, a propionyl group, a benzoyl group and the like.

The number of carbon atoms in the hydrocarbyloxycarbonyl group represented by R⁴ is preferably 2 to 10, more preferably 2 to 8, and even more preferably 2 to 5. Examples of the hydrocarbyloxycarbonyl group represented by R⁴ include an alkyloxycarbonyl group such as a methyloxycarbonyl group and an ethyloxycarbonyl group; an alkenyloxycarbonyl group such as an ethenyloxycarbonyl group and a 2-propenyloxycarbonyl group; an alkynyloxycarbonyl group such as a propargyloxycarbonyl group; an aryloxycarbonyl group that may have a substituent, such as a phenoxycarbonyl group, a 4-methylphenyloxycarbonyl group, a 4-chlorophenoxycarbonyl group, a 1-naphthyloxycarbonyl group and a 2-naphthyloxycarbonyl group; and the like.

As the organotellurium compound represented by formula (1), a compound in which R¹ represents an alkyl group or an unsubstituted or substituted aryl group, R² and R³ represent hydrogen atoms, R⁴ represents an unsubstituted or substituted vinyl group, an unsubstituted or substituted aryl group, a hydrocarbyloxycarbonyl group or a cyano group, is preferred. When R⁴ is an unsubstituted or substituted vinyl group, the obtained copolymer can be used as a reactive site for utilizing a polymerizable group or for introducing a functional group, because the copolymer has a double bond at a side of the polymerization initiating terminal in the polymer chain.

Specific examples of the organotellurium compound represented by formula (1) include 3-methyltellanyl-1-propene, 3-methyltellanyl-2-methyl-1-propene, 3-methyltellanyl-2-phenyl-1-propene, 3-methyltellanyl-3-methyl-1-propene, 3-ethyltellanyl-1-propene, 3-[(n-propyl)tellanyl]-1-propene, 3-isopropyltellanyl-1-propene, 3-(n-butyl) tellanylpropene, 3-[(n-hexyl)tellanyl]-1-propene, 3-phenyltellanyl-1-propene, 3-[(p-methylphenyl)tellanyl]-1-propene,3-[(2-pyridyl)tellanyl]-1-propene, 3-methyltellanyl-2-butene, 3-methyltellanyl-1-cyclohexene, 3-methyltellanyl-3-cyano-1-propene, 1,4-bis(methyltellanyl)-2-butene, (methyltellanylmethyl)benzene, (1-methyltellanylethyl)benzene, 1-chloro-4-(1-methyltellanylethyl)benzene, 1-trifluoromethyl-4-(1-methyltellanylethyl)benzene, 3,5-bis-trifluoromethyl-1-(1-methyltellanylethyl)benzene, 1,2,3,4,5-pentafluoro-6-(1-methyltellanylethyl)benzene, 2-methyltellanyl propionitrile, 2-methyl-2- methyltellanyl propionitrile, methyl-2-methyltellanyl-2-methyl-propionate, ethyl-2-methyl-2-phenyltellanyl propionate and the like. The organotellurium compounds used in the present invention are not limited to them.

The organotellurium compound represented by formula (1) can be obtained by reacting a compound represented by the following formula (4), a compound represented by the following formula (5) and a metal tellurium in accordance with a method described in WO 2004/014962 brochure, for example.

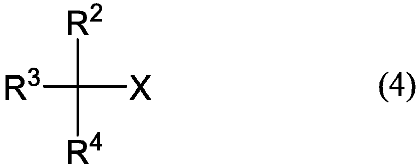

M(R¹)ₘ (5)

In formula (4), R² to R⁴ represent the same groups represented by R², R³ and R⁴ in formula (1), respectively. X represents a halogen atom. The halogen atom represented by X may be any of a fluorine atom, a chlorine atom, a bromine atom and an iodine atom, but it is preferably a chlorine atom or a bromine atom.

In formula (5), R¹ represents the same group represented by R¹ in formula (1). M represents an alkaline metal such as lithium, sodium and potassium; an alkaline earth metal such as magnesium and calcium; or copper. When M is an alkaline metal, m is 1, when M is an alkaline earth metal, m is 2, and when M is copper, m is 1 or 2. Note that when M in formula (5) is magnesium, one of the two groups represented by R¹ may be a halogen atom. That is, the compound represented by formula (5) may be a so-called Grignard reagent.

Specifically, a suspension is prepared by suspending a metal tellurium in a solvent under an inert gas atmosphere, and the reaction is carried out by adding the compound represented by formula (5) to this suspension. Subsequently, the reaction may be further carried out by adding the compound represented by formula (4) to the resulting reaction solution to obtain an organotellurium compound represented by formula (1).

The compound represented by formula (5) is used in an amount of normally 0.5 mol or more, preferably 0.8 mol or more, and normally 1.5 mol or less, preferably 1.2 mol or less based on 1 mol of the metal tellurium. In addition, it is used in an amount of normally 0.5 to 1.5 mol, and preferably 0.8 to 1.2 mol based on 1 mol of the metal tellurium.

The compound represented by formula (4) is used in an amount of normally 0.5 mol or more, preferably 0.8 mol or more, and normally 1.5 mol or less, preferably 1.2 mol or less based on 1 mol of the metal tellurium. In addition, it is used in an amount of normally 0.5 to 1.5 mol, preferably 0.8 to 1.2 mol based on 1 mol of the metal tellurium.

Examples of the inert gas include nitrogen gas, helium gas, argon gas and the like.

Examples of the solvent to be used include an ether-based solvent such as diethyl ether and tetrahydrofuran (THF); an amide-based solvent such as dimethylformamide and N-methylpyrrolidone; an aromatic solvent such as benzene and toluene; an aliphatic hydrocarbon-based solvent such as pentane and hexane; and the like.

When the compound represented by formula (5) and the compound represented by formula (4) are individually added to the reaction system, it is preferable to drop the compounds at a low temperature (-20°C to +5°C).

The reaction conditions are not particularly limited. For example, the reaction period is 5 minutes to 24 hours and the reaction temperature is -20°C to 80°C.

In both reactions, the desired products can be isolated by a known post-treatment operation and a known separation and purification process after completion of the reaction. For example, the reaction solution may be washed sequentially with degassed water, a degassed ammonium chloride aqueous solution and degassed saturated saline solution, then the organic layer may be dried and concentrated to obtain a crude product. In addition, if necessary, the resulting reaction product is purified by a known purification method such as a reduced-pressure distillation method to obtain a desired organotellurium compound in high purity.

### [Radical generator]

The radical generator used in the method for producing the copolymer according to one embodiment of the invention is not particularly limited as long as it generates radicals by heating or light irradiation, for which, for example, a peroxide (including a hydroperoxide, the same applies to the following), a hydrogen peroxide, a persulfate, and an azo-based radical generator and the like are used. Above all, the azo-based radical generator, the peroxide and the persulfate are preferred as the radical generator.

When copolymerization reaction is carried out in the presence of these radical generators, the copolymerization reaction is further promoted, and the copolymer can be efficiently obtained.

The peroxide can be used without particular limitation as long as it is a peroxide used as a polymerization initiator or a polymerization promotor in an ordinary radical polymerization.

Examples thereof include diisobutyryl peroxide, diisopropyl peroxide, t-butylperoxypivalate, dilauroyl peroxide, t-hexylperoxy-2-ethylhexanoate, dibenzoyl peroxide, t-butylcumyl peroxide, p-menthanehydroperoxide, t-butylhydroperoxide and the like.

The persulfate can be used without particular limitation as long as it is a persulfate used as a polymerization initiator or polymerization promoter in ordinary radical polymerization.

Examples thereof include sodium peroxodisulfate, potassium peroxodisulfate, ammonium peroxodisulfate and the like.

The azo-based radical generator can be used without particular limitation as long as it is an azo-based radical generator used as a polymerization initiator or polymerization promoter in ordinary radical polymerization.

Examples thereof include 2,2'-azobis(isobutyronitrile) (AIBN), 2,2'-azobis(2-methylbutyronitrile) (AMBN), 2,2'-azobis(2,4-dimethylvaleronitrile) (ADVN), 1,1'-azobis(cyclohexane-1-carbonitrile) (ACHN), dimethyl-2,2'-azobisisobutyrate (MAIB), 4,4'-azobis(4-cyanovaleric acid) (ACVA), 1,1'-azobis(1-acetoxy-1-phenylethane), 2,2'-azobis(2-methylbutyramide), 2,2'-azobis(4-methoxy-2,4-dimethylvaleronitrile), 2,2'-azobis(2-methylamidinopropane) dihydrochloride, 2,2'-azobis[2-(2-imidazolin-2-yl) propane], 2,2'-azobis[2-methyl-N-(2-hydroxyethyl) propionamide], 2,2'-azobis(2,4,4-trimethylpentane), 2-cyano-2-propylazoformamide, 2,2'-azobis(N-butyl-2-methylpropionamide), 2,2'-azobis(N-cyclohexyl-2-methylpropionamide) and the like.

These azo-based radical generators may be used either alone or in combination of two or more kinds.

It is preferred that these radical generators are appropriately selected depending on reaction conditions.

For example, when carrying out the polymerization reaction at a low temperature (40°C or lower), diisobutyryl peroxide, diisopropyl peroxide, 2,2'-azobis(2,4-dimethylvaleronitrile) (ADVN) and 2,2'-azobis(4-methoxy-2,4-dimethylvaleronitrile) are preferred, when carrying out the polymerization reaction at a medium temperature (40 to 80°C), t-butyl peroxypivalate, dilauroyl peroxide, t-hexylperoxy-2-ethylhexanoate, dibenzoyl peroxide, sodium peroxodisulfate, potassium peroxodisulfate, ammonium peroxodisulfate, 2,2'-azobis(isobutyronitrile) (AIBN), 2,2'-azobis(2-methylbutyronitrile) (AMBN), 1,1'-azobis(cyclohexane-1-carbonitrile) (ACHN), dimethyl-2,2'-azobisisobutyrate (MAIB), 2,2'-azobis[2- (2-imidazolin-2-yl) propane] and 1,1'-azobis(1-acetoxy-1-phenylethane) are preferred, and when carrying out the polymerization reaction at a high temperature (80°C or higher), t-butylcumyl peroxide, p-menthanehydro peroxide, t-butylhydro peroxide, 1,1'-azobis(cyclohexane-1-carbonitrile) (ACHN), 2-cyano-2-propylazoformamide, 2,2'-azobis(N-butyl-2-methylpropionamide), 2,2'-azobis(N-cyclohexyl-2-methylpropionamide) and 2,2'-azobis(2,4,4-trimethylpentane) are preferred.

### [Conjugated diene-based monomer]

In the method for producing the copolymer according to one embodiment of the invention, a conjugated diene-based monomer is used as a monomer.

Examples of the conjugated diene-based monomer include 1,3-butadiene, isoprene, 2,3-dimethyl-1,3-butadiene, 2-phenyl-1,3-butadiene, 2-chloro-1,3-butadiene, 1,3-pentadiene, 2-methyl-1,3-pentadiene, 1,3-hexadiene, 4,5-diethyl-1,3-octadiene, 3-butyl-1,3-octadiene and the like. Above all, 1,3-butadiene and isoprene are preferred.

### [Radically polymerizable monomer other than conjugated diene-based monomer]

In the method for producing the copolymer according to one embodiment of the invention, in addition to the conjugated diene-based monomer, a radically polymerizable monomer (α) is used as a monomer.

The radically polymerizable monomer (α) is a radically polymerizable monomer other than conjugated diene-based monomers, and is not particularly limited as long as it is radically copolymerizable with the conjugated diene monomer.

Examples of the radically polymerizable monomer (α) include an acrylic monomer such as methyl (meth)acrylate, ethyl (meth)acrylate, propyl (meth)acrylate, butyl (meth)acrylate, octyl (meth)acrylate, lauryl (meth)acrylate, 2-hydroxyethyl (meth)acrylate, cyclohexyl (meth)acrylate, methylcyclohexyl (meth)acrylate, isobornyl (meth)acrylate, cyclododecyl (meth)acrylate, glycidyl (meth)acrylate, (meth)acrylic acid, (meth)acrylamide, N-methyl(meth)acrylamide, N-isopropyl (meth)acrylamide, N,N-dimethyl(meth)acrylamide, N-(2-dimethylaminoethyl) (meth)acrylamide, N-(3-dimethylaminopropyl) (meth)acrylamide, 2-(dimethylamino)ethyl (meth)acrylate, 3-dimethylaminopropyl (meth)acrylate, hydroxyethyl (meth)acrylate, (meth)acrylonitrile, 2-hydroxy-3-(meth)acryloyloxy propyltrimethylammonium chloride and (meth)acryloyl aminoethyl dimethylbenzylammonium chloride [wherein "(meth)acryl" means "acryl or methacryl".];
a styrene-based monomer such as styrene, α-methylstyrene, 2-methylstyrene, 3-methylstyrene, 4-methylstyrene, 4-methoxystyrene, 4-tert-butylstyrene, 4-n-butylstyrene, 4-tert-butoxystyrene, 2-hydroxymethylstyrene, 2-chlorostyrene, 4-chlorostyrene, 2,4-dichlorostyrene, 1-vinylnaphthalene, divinylbenzene, 4-styrenesulfonic acid or an alkaline metal salt thereof (sodium salt, potassium salt, etc.);
an α-olefin-based monomer such as ethylene, propene, 1-butene, 1-pentene, 1-hexene, 1-octene and 1-decene,
a nitrile-based monomer such as acrylonitrile and methacrylonitrile;
a vinyl-based monomer such as 2-vinylthiophene, N-methyl-2-vinylpyrrole, 1-vinyl-2-pyrrolidone, 2-vinylpyridine, 4-vinylpyridine, N-vinylformamide, N-vinylacetamide, vinyl acetate, vinyl benzoate, methylvinylketone, vinyl chloride and vinylidene chloride;
an unsaturated carboxylic acid-based monomer such as maleic acid, fumaric acid, itaconic acid, citraconic acid, crotonic acid and maleic anhydride;
a nonconjugated diene-based monomer such as 4-methyl-1,4-hexadiene and 7-methyl-1,6-octadiene; and the like.

These radically polymerizable monomers (α) may be used either alone or in combination of two or more kinds.

### [Production method (I)]

The production method (I) is a method for producing a copolymer having a repeating unit derived from a conjugated diene-based monomer and using a radical polymerization initiator and a radical generator, wherein the radical polymerization initiator is a compound represented by the above formula (1), and wherein emulsion polymerization or suspension polymerization between the conjugated diene-based monomer and a radically polymerizable monomer (α) is carried out.

Emulsion polymerization refers to polymerization in which the monomer is mixed in an aqueous medium, and a radical polymerization initiator and a radical generator are added there to, and polymerization reaction is carried out predominantly in micelle. Normally an emulsifier (surfactant) is used for forming micelle,

Suspension polymerization refers to polymerization in which the monomer is mixed in an aqueous medium, and a radical polymerization initiator and a radical generator are added thereto, and polymerization reaction is carried out almost without micelle. A dispersant or a surfactant is used as necessary so that the copolymer particles obtained by the reaction are dispersed.

When a conjugated diene-based monomer and a radically polymerizable monomer (α) are copolymerized by a method other than these polymerization methods, Diels-Alder reaction occurs as a side reaction and a desired copolymer cannot be synthesized in high purity in some cases.

On the other hand, when the emulsion polymerization method or the suspension polymerization method is used, the side reaction product can be reduced and the desired copolymer can be synthesized in high purity.

In polymerization reaction, the amounts of the organotellurium compound represented by formula (1), the radical generator and the monomer to be used are not particularly limited.

The amount of the organotellurium compound represented by formula (1) is normally 0.00005 mol or more, preferably 0.0001 mol or more, and 0.2 mol or less and preferably 0.02 mol or less based on 1 mol of the monomer. Furthermore, it is 0.00005 to 0.2 mol, and preferably 0.0001 to 0.02 mol based on 1 mol of the monomer.

The amount of the radical generator is normally 0.01 mol or more, preferably 0.05 mol or more, and 100 mol or less, preferably 10 mol or less based on 1 mol of the organotellurium compound represented by formula (1). Furthermore, it is 0.01 to 100 mol, and preferably 0.05 to 10 mol based on 1 mol of the organotellurium compound represented by formula (1).

In addition, a molar ratio of the conjugated diene-based monomer to the radically polymerizable monomer (α) [conjugated diene-based monomer:radically polymerizable monomer (α)] is normally 10:90 to 90:10, preferably 20:80 to 80:20, and more preferably 30:70 to 75:25.

As the aqueous medium used for the polymerization reaction, water is normally used.

The amount of the aqueous medium to be used is not particularly limited, but is normally 50 parts by weight or more, preferably 70 parts by weight or more, and normally 2000 parts by weight or less, preferably 1,500 parts by weight or less based on 100 parts by weight of the monomer. Furthermore, it is normally 50 to 2000 parts by weight and preferably 70 to 1,500 parts by weight based on 100 parts by weight of the monomer.

Examples of the emulsifier used in the polymerization reaction include an anionic surfactant, a cationic surfactant, a neutral surfactant and the like. Above all, the anionic surfactant is preferred.

Examples of the anionic surfactant include a fatty acid salt such as sodium laurate, potassium myristate, sodium palmitate, potassium oleate, sodium linolenate, sodium rosinate and potassium rosinate; an alkylbenzene sulfonate such as sodium dodecylbenzenesulfonate, potassium dodecylbenzenesulfonate, sodium decylbenzenesulfonate, potassium decylbenzenesulfonate, sodium cetylbenzenesulfonate and potassium cetylbenzenesulfonate; an alkylsulfosuccinate such as sodium di(2-ethylhexyl)sulfosuccinate, potassium di(2-ethylhexyl)sulfosuccinate and sodium dioctylsulfosuccinate; an alkylsulfate salt such as sodium dodecylsulfate and potassium dodecylsulfate; a polyoxyethylenealkylether sulfate salt such as sodium polyoxyethylenelaurylether sulfate and potassium polyoxyethylenelaurylether sulfate; a monoalkyl phosphate such as sodium laurylphosphate and potassium laurylphosphate; and the like.

These emulsifiers may be used either alone or in combination of two or more kinds.

The amount of the emulsifier to be used is not particularly limited, but is normally 0.01 part by weight or more, preferably 0.1 part by weight or more and normally 50 parts by weight or less based on 100 parts by weight of the monomer. Furthermore, it is normally 0.01 to 50 parts by weight, and preferably 0.1 to 50 parts by weight based on 100 parts by weight of the monomer.

Examples of the dispersant used in the polymerization reaction include a nonionic polymer compound such as polyvinyl alcohol, polyvinylpyrrolidone, polyethylene oxide and cellulose derivative; an anionic polymer compound such as polyacrylic acid and salt thereof, polymethacrylic acid and salt thereof, and a copolymer of methacrylate ester with methacrylic acid and/or salt thereof; a slightly water-soluble inorganic compound such as calcium phosphate, calcium carbonate and aluminum hydroxide; and the like.

These dispersants may be used either alone or in combination of two or more kinds.

The amount of the dispersant to be used is not particularly limited, but is normally 0.01 part by weight or more, preferably 0.05 part by weight or more and normally 30 parts by weight or less, preferably 10 parts by weight or less based on 100 parts by weight of the monomer. Furthermore, it is normally 0.01 to 30 parts by weight and preferably 0.05 to 10 parts by weight based on 100 parts by weight of the monomer.

The polymerization reaction system may further include a ditelluride compound represented by the following formula (3).

**R⁵-Te-Te-R⁶** **(3)**

(wherein, each of R⁵ and R⁶ independently represents an alkyl group, an unsubstituted or substituted aryl group or an unsubstituted or substituted aromatic heterocyclic group.)

When polymerization reaction is carried out in the presence of the ditelluride compound represented by formula (3), the polymerization reaction can be more sufficiently controlled to obtain a copolymer having a molecular weight closer to the theoretical value and a narrow molecular weight distribution.

Specific examples of the alkyl group, the unsubstituted or substituted aryl group or the unsubstituted or substituted aromatic heterocyclic group represented by R⁵ and R⁶ include the same groups as cited for the alkyl group, the unsubstituted or substituted aryl group or the unsubstituted or substituted aromatic heterocyclic group represented by R¹ in formula (1), respectively.

Specific examples of the ditelluride compound represented by formula (3) include dimethyl ditelluride, diethyl ditelluride, di(n-propyl) ditelluride, diisopropyl ditelluride, dicyclopropyl ditelluride, di(n-butyl) ditelluride, di(sec-butyl) ditelluride, di(tert-butyl) ditelluride, dicyclobutyl ditelluride, diphenyl ditelluride, bis(p-methoxyphenyl) ditelluride, bis(p-aminophenyl) ditelluride, bis(p-nitrophenyl) ditelluride, bis (p-cyanophenyl) ditelluride, bis(p-sulfonylphenyl) ditelluride, bis(2-naphthyl) ditelluride, 4,4'-dipyridyl ditelluride and the like.

These ditelluride compounds may be used either alone or in combination of two or more kinds.

Many of the ditelluride compounds represented by formula (3) are known substances and can be produced and obtained by known methods.

When the ditelluride compound represented by formula (3) is used, it is used in an amount of normally 0.01 mol or more, preferably 0.1 mol or more, and normally 100 mol or less, preferably 10 mol or less, more preferably 5 mol or less based on 1 mol of the organotellurium compound represented by formula (1). Furthermore, it is used in an amount of normally 0.01 to 100 mol, preferably 0.1 to 10 mol, and more preferably 0.1 to 5 mol based on 1 mol of the organotellurium compound represented by (1).

The polymerization reaction is normally carried out in a container whose inside has been purged with an inert gas such as nitrogen gas, helium gas and argon gas. The polymerization reaction is normally carried out under normal pressure, but may be carried out under pressure or under reduced pressure.

The polymerization temperature is not particularly limited, but is normally 0 to 100°C, and preferably 40 to 90°C.

The polymerization period is not particularly limited, but is normally 1 minute to 100 hours, and preferably 1 minute to 30 hours.

Additionally, in the method for producing the copolymer according to one embodiment of the invention, the polymerization reaction may be carried out while irradiating the polymerization reaction system with light.

When the polymerization reaction is carried out while irradiating the polymerization reaction system with light, the polymerization reaction is further promoted, and the copolymer can be efficiently obtained.

As the light for irradiation, ultraviolet light or visible light is preferable. Light irradiation can be carried out by a method commonly used in photopolymerization reaction. For example, it is desirable that light irradiation is carried out by using a light source such as a low-pressure mercury lamp, a medium-pressure mercury lamp, a high-pressure mercury lamp, an ultrahigh-pressure mercury lamp, a chemical lamp, a black-light lamp, a microwave-excited mercury lamp, a metal halide lamp, a xenon lamp, a krypton lamp and an LED lamp.

In Production Method (I), at the start of the polymerization reaction, the reaction system may include the conjugated diene-based monomer and the radically polymerizable monomer (α), or at the start of the polymerization reaction, either one of these monomers needs not be included.

For example, at the start of the polymerization reaction, emulsion polymerization or suspension polymerization may be carried out in a state that the conjugated diene-based monomer and the radically polymerizable monomer (α) coexist in the reaction system to obtain a random copolymer.

In addition, the radically polymerizable monomer (radically polymerizable monomer (α)) other than conjugated diene-based monomers may be subjected to emulsion polymerization or suspension polymerization (hereinafter referred to as "first polymerization reaction" in some cases) using the radical polymerization initiator and the radical generator represented by formula (1), then the conjugated diene-based monomer and the radically polymerizable monomer (α) may be further subjected to emulsion polymerization or suspension polymerization (hereinafter referred to as "second polymerization reaction" in some cases) to obtain a block copolymer having the block formed by the first polymerization reaction and the block formed by the second polymerization reaction.

The radically polymerizable monomer (α) to be used in the first polymerization reaction and the radically polymerizable monomer (α) to be used in the second polymerization reaction may be either identical to or different from each other.

The first polymerization reaction can be carried out in the same manner as in the method explained above, except that the radically polymerizable monomer (α) is used instead of the conjugated diene-based monomer and the radically polymerizable monomer (α) and the conjugated diene-based monomer is not used.

At the completion of the first polymerization reaction, the growth terminal of the polymer chain is an organotellurium portion (R¹-Te-) having high reactivity derived from the organotellurium compound represented by formula (1) and has a living property.

Thus, the second polymerization reaction can be carried out by further adding the conjugated diene-based monomer and if necessary, the radically polymerizable monomer (α) into the reaction system. This second polymerization reaction refers to the above-explained reaction of emulsion polymerization or suspension polymerization between the conjugated diene-based monomer and the radically polymerizable monomer (α). In the second polymerization reaction, the radically polymerizable monomer (α) used in the first polymerization reaction is used, and when the unreacted radically polymerizable monomer (α) remains at the end of the first polymerization reaction, the radically polymerizable monomer (α) needs not be added into the reaction system at the start of the second polymerization reaction.

Additionally, when these monomers are added, a radical generator may be added into the system to enhance the reaction activity.

The growth terminal of the polymer chain during the polymerization reaction in the method for producing the copolymer according to one embodiment of the invention is the organotellurium portion (R¹-Te-) having high reactivity derived from the organotellurium compound represented by formula (1) and has a living property.

When this growing terminal of the polymer chain having a living property is exposed to air, the growth terminal is replaced with a hydrogen atom or a hydroxyl group, and the growth terminal is deactivated.

After completion of the reaction, the copolymer can be isolated and purified in accordance with an ordinary method. Examples of the method include a method in which a solvent and a remaining monomer in the reaction solution is distilled off under reduced pressure to isolate the copolymer, and a method in which the reaction solution is poured into a poor solvent to precipitate the copolymer.

### [Production method (II)]

The production method (II) is a method for producing a copolymer having a repeating unit derived from a conjugated diene-based monomer and using a macroradical polymerization initiator and a radical generator, wherein the macroradical polymerization initiator is a compound represented by the following formula (2), and wherein emulsion polymerization or suspension polymerization between the conjugated diene-based monomer and the radically polymerizable monomer (α) is carried out. 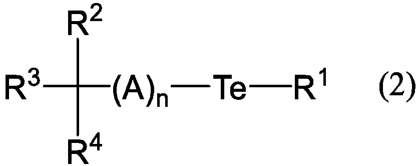 (wherein, R¹, R², R³ and R⁴ represent the same groups represented by R¹, R², R³ and R⁴ in Formula (1), respectively. A represents a repeating unit derived from a hydrophilic monomer. n represents an integer of 1 to 100, and preferably 1 50.)

The hydrophilic monomer is a compound having a radically polymerizable carbon-carbon unsaturated bond and a hydrophilic group in its molecule. Examples thereof include compounds represented by a formula: C(r¹)(r²)=C(r³)(Q¹) [wherein, each of r¹, r² and r³ independently represents a hydrogen atom or an alkyl group having 1 to 6 carbon atoms, and Q¹ represents a hydrophilic group.], and a formula: C(r⁴)(Q²)=C(r⁵)(Q³) (wherein each of r⁴ and r⁵ independently represents a hydrogen atom or an alkyl group having 1 to 6 carbon atoms, and each of Q² and Q³ independently represents a hydrophilic group), and the like.

Examples of the alkyl group having 1 to 6 carbon atoms represented by r¹ to r⁵ include a linear alkyl group such as a methyl group, an ethyl group, an n-propyl group, an n-butyl group, an n-pentyl group and an n-hexyl group; a branched alkyl group such as an isopropyl group, a sec-butyl group and a tert-butyl group; a cycloalkyl group such as a cyclopropyl group, a cyclobutyl group, a cyclopentyl group and a cyclohexyl group; and the like.

Examples of the hydrophilic groups represented by Q¹, Q² and Q³ include a carboxyl group, a sulfo group, a hydroxyl group, an amino group, an ionic group, a group including these groups (for example, 2-hydroxyethyl group), and the like.

Specific examples of the hydrophilic monomer include, a monomer having a carboxyl group, such as maleic acid, fumaric acid, crotonic acid, itaconic acid, acrylic acid and methacrylic acid; a monomer having a sulfo group, such as vinylsulfonic acid; a monomer having a hydroxyl group, such as 2-hydroxyethyl (meth)acrylate and 4-hydroxybutyl (meth)acrylate; a monomer having an amino group, such as acrylamide and 2-N,N-dimethylaminoethyl (meth)acrylate; a monomer having an ionic group, such as trimethylaminoethyl (meth)acrylate chloride and 2-methacryloyloxyethyl phosphorylcholine; and the like.

The repeating unit derived from the hydrophilic monomer means a repeating unit generated by a radical polymerization reaction of the hydrophilic monomer. Specifically, this repeating unit [-(A)-] is a group represented by the following formula (a1) or (a2).

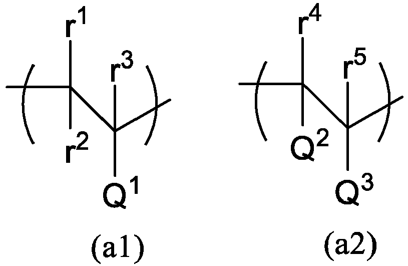

The compound represented by formula (2) can be efficiently obtained by radical polymerization reaction between the compound represented by formula (1) explained in the production method (I) and the hydrophilic monomer.

The radical polymerization reaction between the organotellurium compound represented by formula (1) and the hydrophilic monomer can be carried out by mixing the organotellurium compound and the hydrophilic monomer in a solvent or in the absence of a solvent. This reaction is normally carried out in a container whose inside has been purged with an inert gas such as nitrogen gas, helium gas and argon gas. This reaction is normally carried out under normal pressure, but may be carried out under pressure or under reduced pressure.

Although the solvent to be used is exemplified by an aqueous medium such as water, an organic solvent commonly used in radical polymerization can also be used. Examples of such an organic solvent include alcohols, N,N-dimethylformamide (DMF), dimethylsulfoxide (DMSO), tetrahydrofuran, dioxane, acetone, chloroform, ethyl acetate, toluene and the like.

The reaction temperature is not particularly limited, but is normally 0 to 100°C and preferably 10 to 90°C.

The reaction period is not particularly limited, but is normally 1 minute to 12 hours and preferably 1 minute to 6 hours.

The obtained compound represented by formula (2) may be isolated and purified in accordance with a ordinary method and then used in the production method (II), or otherwise the reaction solution obtained by this reaction may be used in the production method (II), as is. Also in this case, the reaction for obtaining the reaction solution containing the compound represented by formula (2) may be carried out in the same solvent system as the solvent system for emulsion polymerization or suspension polymerization between a conjugated diene-basedmonomer and a radically polymerizable monomer (α), followed by adding the conjugated diene-based monomer and the radically polymerizable monomer (α) to the reaction system for emulsion polymerization or suspension polymerization, or otherwise after a reaction solution containing the compound represented by formula (2) is obtained, the reaction solvent system may be made into a solvent system for emulsion polymerization or suspension polymerization between the conjugated diene-based monomer and the radically polymerizable monomer (α), followed by adding the conjugated diene-based monomer and the radically polymerizable monomer (α) to the reaction system for emulsion polymerization or suspension polymerization.

The production method (II) can be carried out in the same manner as in the production method (I) except that the compound represented by formula (2) is used as a macroradical polymerization initiator instead of the radical polymerization initiator [compound represented by formula (1)].

In accordance with the production method (II), the same copolymer as the copolymer obtained in the production method (I) can be produced in high purity except that a repeating unit derived from a hydrophilic monomer is introduced.

Like the production method (I), also in the production method (II), the reaction system may include the conjugated diene-based monomer and the radically polymerizable monomer (α) at the start of the polymerization reaction, or otherwise either one of these monomers needs not be included at the start of the polymerization reaction.

That is, a random copolymer can be obtained by emulsion polymerization or suspension polymerization in a state where the conjugated diene-based monomer and the radically polymerizable monomer (α) coexist in the reaction system at the start of the polymerization reaction.

In addition, a radically polymerizable monomer (radically polymerizable monomer (α)) other than the conjugated diene-based monomer may be subjected to emulsion polymerization or suspension polymerization using the macroradical polymerization initiator represented by formula (2) and a radical generator, then the conjugated diene-based monomer and the radically polymerizable monomer (α) may be subjected to emulsion polymerization or suspension polymerization in the reaction system to obtain a block copolymer.

### [Copolymer]

The molecular weight of the copolymer obtained by the production method (I) or (II) can be adjusted depending on the reaction period and the amount of the organotellurium compound, but for example, the number average molecular weight in terms of polystyrene is 500 to 1,000, 000, and preferably 1,000 to 200,000. In addition, the molecular weight distribution (Mw/Mn) is normally 1.01 to 2.50, preferably 1.01 to 2.00 and more preferably 1.01 to 1.60.

In the copolymer obtained in accordance with the production method (I) or (II), the ratio (molar ratio) of the repeating unit derived from the conjugated diene-based monomer to the repeating unit derived from the radically polymerizable monomer (α) [conjugated diene-based monomer unit:radically polymerizable monomer (α) unit] is normally 10:90 to 90:10, preferably 20:80 to 80:20, and more preferably 30:70 to 75:25.

In accordance with the production method (I) or (II), the amount of by-products by Diels-Alder reaction can be reduced and the desired copolymer can be produced in high purity.

The yield of the by-products by Diels-Alder reaction is normally 20% or lower, and preferably 10% or lower.

### [Method for producing latex]

The method for producing the latex according to one embodiment of the invention is a method for producing a latex in which a copolymer particle is dispersed in water, and wherein a copolymer having a repeating unit derived from a conjugated diene-based monomer is synthesized by the method for producing the copolymer according to one embodiment of the invention.

That is, the reaction solution or a concentrate or diluent thereof obtained in the above-described production method (I) or (II) is a latex obtained by the production method according to one embodiment of the invention.

In the latex obtained by the production method according to one embodiment of the invention, an average particle diameter of the copolymer particle dispersed in water is normally 0.01 to 1000 µm and preferably 0.05 to 500 µm.

The latex obtained by the production method according to one embodiment of the invention may be further blended with a required amount of other additives depending on the intended purpose. Examples of other additives include pigment, dye, filler, flow regulator, dispersant, plasticizer, electric charge-adjusting agent, adhesivity promotor, antioxidant, light stabilizer and the like.

### EXAMPLES

Hereinafter, the present invention will be explained more specifically with reference to examples and the like. Note that the invention is not limited to the following examples and the like. In each of the following examples, "parts" and "%" respectively refer to "parts by weight" and "wt%" unless otherwise indicated.

In each of the following examples, various measurements were carried out in accordance with the following methods.

### [¹H-NMR measurement]

For the measurement, "BRUKER-500" manufactured by Bruker Corporation was used as a measuring apparatus, and CDCl₃ was used as a solvent.

### [Gas Chromatography Measurement]

For measurement, "GC2010" manufactured by Shimadzu Corporation was used as a measuring apparatus and "ZB-5" manufactured by Phenomenex, Inc. was used as a column, and quantification was carried out based on an internal standard method using mesitylene.

### [Gel permeation chromatography (GPC) measurement]

The weight average molecular weight (Mw), the number average molecular weight (Mn) and the molecular weight distribution (Mw/Mn) of the polymer were determined as polystylene-equivalent values by gel permeation chromatography (GPC) measurement using tetrahydrofuran (THF) as an eluent and "HLC-8220" manufactured by Tosoh Corporation as a measuring apparatus and four "SuperMultipore HZ-H" of "TSK-GEL" manufactured by Tosoh Corporation being connected as columns.

### [Synthesis Example 1] Synthesis of 3-methyltellanyl-1-propene

11.48 g (90 mmol) of metal tellurium (manufactured by Sigma-Aldrich Co. LLC, the same applies to the following) was suspended in 86 ml of THF in a 300 ml three-necked flask under a nitrogen atmosphere. The resulting suspension was cooled to 0°C while stirring. 86.0 ml (94.5 mmol) of methyllithium (1.10 M diethylether solution, manufactured by Kanto Chemical Co., Inc., the same applies to the following) was dropped to this suspension over 10 minutes while continuing to stir and cool the suspension. After the dropping, the contents in the three-necked flask were stirred at room temperature (25°C) for 20 minutes to obtain a reaction solution in which the metal tellurium had completely disappeared.

The resulting reaction solution was cooled to 0°C while stirring. 11.4 g (94.5 mmol) of allyl bromide (manufactured by Tokyo Chemical Industry Co., Ltd., the same applies to the following) was added to this reaction solution while continuing to stir and cool the reaction solution. The reaction was carried out by continuing the stirring of the contents in the three-necked flask for 2 hours while maintaining the state, and then the reaction solution was returned to room temperature.

The resulting reaction solution was washed sequentially with degassed water, a degassed saturated NH₄Cl aqueous solution, and a degassed saturated NaCl aqueous solution. Subsequently, anhydrous magnesium sulfate was added to the organic layer (reaction solution after washing), dried, and then filtered through celite under a nitrogen atmosphere. The filtrate was concentrated under reduced pressure, and then the concentrate was distilled under reduced pressure to obtain 6.55 g (yield: 40%) of 3-methyltellanyl-1-propene as a yellow oily matter.

¹H-NMR data of the resulting 3-methyltellanyl-1-propene is shown below. ¹H-NMR (500 MHz, CDCl₃, TMS, δ ppm) 1.85 (s, 3H), 3.31 (d, J=8.5 Hz, 2H), 4.80 (d, J=9.0 Hz, 1H), 4.85 (d, J=17.0 Hz, 1H), 5.90-5.99 (m, 1H)

### [Synthesis Example 2] Synthesis of ethyl-2-methyl-2-phenyltellanyl propionate

13.4 g (yield: 51%) of ethyl-2-methyl-2-phenyltellanyl propionate was obtained as a yellow oily matter by reaction/purification in the same manner as in Synthesis Example 1, except that 96.4 ml (94.5 mmol) of phenyllithium (0.98 M cyclohexane-diethyl ether solution, manufactured by Kanto Chemical Co., Inc.) was used instead of methyllithium, and 18.45 g (94.5 mmol) of ethyl-2-bromoisobutyrate (manufactured by Tokyo Chemical Industry Co., Ltd.) was used instead of allyl bromide.

¹H-NMR data of the resulting ethyl-2-methyl-2-phenyltellanyl propionate is shown below.
¹H-NMR (500 MHz, CDCl₃, TMS, δ ppm) 1.18 (t, J=7.2 Hz, 3H), 1.73 (s, 6H), 4.07 (q, J=7.2 Hz, 2H), 7.26-7.30 (m, 2H), 7.39-7.43 (m, 1H), 7.88-7.90 (m, 2H)

### [Synthesis Example 3] Synthesis of 2-methyl-2-methyltellanyl propionitrile

5.97 g (yield: 31%) of 2-methyl-2-methyltellanyl propionitrile was obtained as a yellow oily matter by reaction/purification in the same manner as in Synthesis Example 1 except that 13.99 g (94.5 mmol) of 2-bromo-2-methylpropionitrile was used instead of allyl bromide.

¹H-NMR data of the resulting 2-methyl-2-methyltellanyl propionitrile is shown below.

¹H-NMR (500 MHz, CDCl₃, TMS, δ ppm) 1.88 (s, 6H), 2.39 (s, 3H)

### [Synthesis Example 4] Synthesis of macroradical polymerization initiator

0.426 part of methacrylic acid (manufactured by Wako Pure Chemical Corporation) was added to 0.030 part of 3-methyltellanyl-1-propene obtained in Synthesis Example 1, which was stirred at 25°C for 30 minutes to obtain a macroradical polymerization initiator.

The macroradical polymerization initiator was isolated from the resulting reaction solution and its structure was confirmed, and as a result, it was found that this macroradical polymerization initiator was a compound having a structure represented by formula (2a) (average value of nl was 30).

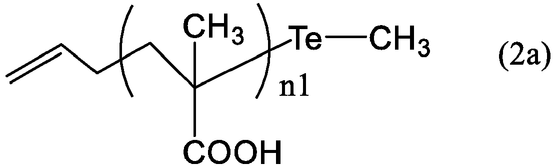

### [Synthesis Example 5] Synthesis of macroradical polymerization initiator

0.351 part of acrylamide (manufactured by Tokyo Chemical Industry Co., Ltd.) was added to 0.030 part of 3-methyltellanyl-1-propene obtained in Synthesis Example 1, which was stirred at 60°C for 1 hour to obtain a macroradical polymerization initiator.

The macroradical polymerization initiator was isolated from the resulting reaction solution and its structure was confirmed, and as a result, it was found that this macroradical polymerization initiator was a compound having a structure represented by formula (2b) (average value of n2 was 30).

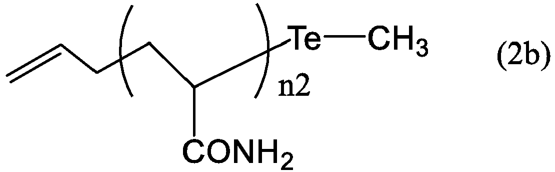

### [Synthesis Example 6] Synthesis of dimethyl ditelluride

5.23 g (41 mmol) of metal tellurium was suspended in 45 ml of THF in a 300 ml three-necked flask under a nitrogen atmosphere. The resulting suspension was cooled to 0°C wile stirring. 45.0 ml (43.0 mmol) of methyllithium (1.10 M diethylether solution) was dropped to this suspension over 10 minutes while continuing to stir and cool the suspension. After the dropping, the contents in the three-necked flask were stirred at room temperature (25°C) for 20 minutes to obtain a reaction solution in which the metal tellurium had completely disappeared.

While stirring the resulting reaction solution, 30 mL of saturated NH₄Cl aqueous solution was added to this reaction solution, which was stirred in air for 1 hour. The organic layer was separated and washed sequentially with water and a saturated NaCl aqueous solution. Subsequently, anhydrous magnesium sulfate was added to the organic layer (reaction solution after washing), dried, and then filtered through celite. The filtrate was concentrated under reduced pressure, and then the concentrate was distilled under reduced pressure (0.6 mmHg, 43°C) to obtain 2.48 g (yield: 42%) of dimethyl ditelluride as a brown oily matter.

¹H-NMR data of the resulting dimethyl ditelluride is shown below. ¹H-NMR (500 MHz, CDCl₃, TMS, δ ppm) 2.67 (s, 6H)

The monomers, radical polymerization initiators and radical generators used in Examples and Comparative Example are as follows.
Isoprene (IP): manufactured by Tokyo Chemical Industry Co., Ltd.
1,3-butadiene (BD): manufactured by Tokyo Chemical Industry Co., Ltd.
Acrylonitrile (AN): manufactured by Wako Pure Chemical Corporation
Ethyl acrylate (EA): manufactured by Wako Pure Chemical Corporation
Butyl acrylate (BA): manufactured by Wako Pure Chemical Corporation
Styrene (St): manufactured by Wako Pure Chemical Corporation
Methyl methacrylate (MMA): manufactured by Wako Pure Chemical Corporation
Radical polymerization initiator (1): 3-methyltellanyl-1-propene (Synthesis Example 1)
Radical polymerization initiator (2): ethyl-2-methyl-2-phenyltellanyl propionate
(Synthesis Example 2)

Radical polymerization initiator (3): 2-methyl-2-methyltellanyl propionitrile (Synthesis

### Example 3)

Radical polymerization initiator (4): macroradical polymerization initiator (Synthesis

### Example 4)

Radical polymerization initiator (5): Macroradical polymerization initiator (Synthesis

### Example 5)

Radical generator (1): 2,2'-azobisisobutyronitrile (AIBN) (manufactured by Wako Pure Chemical Corporation)

Radical generator (2): 2,2'-azobis[2-(2-imidazolin-2-yl) propane] (manufactured by Wako Pure Chemical Corporation)

Radical generator (3): ammonium persulfate (APS) (manufactured by Wako Pure Chemical Corporation)

### [Example 1]

2.0 parts of sodium dodecyl sulfate (manufactured by Tokyo Chemical Industry Co., Ltd.) and 216 parts of distilled water were put into an 80 mL glass reactor and mixed to obtain a surfactant aqueous solution. Subsequently, 0.027 part of radical generator (1), 56.2 parts of isoprene, 43.8 parts of acrylonitrile, 10 parts of mesitylene (manufactured by Wako Pure Chemical Corporation, the same applies to the following) as an internal standard for gas chromatography analysis (hereinafter referred to as "internal standard") were added to this surfactant aqueous solution and stirred to prepare a monomer emulsion.

This monomer emulsion was sufficiently degassed by nitrogen bubbling, then 0.030 part of radical polymerization initiator (1) was added to the emulsion, which was stirred at 60°C for 18 hours for polymerization reaction.

The polymerization solution was poured into methanol to precipitate a polymerization reaction product. The precipitate was taken by filtration and dried to obtain an isoprene-acrylonitrile random copolymer.

As a result of gas chromatography analysis, a conversion ratio of isoprene was 62%, a conversion ratio of acrylonitrile was 40%, and a yield of a Diels-Alder product of isoprene and acrylonitrile obtained as a by-product was 4%.

As a result of GPC analysis, the isoprene-acrylonitrile random copolymer had an Mw of 146,000, an Mn of 94,000, and an Mw/Mn of 1.55.

### [Example 2]

Polymerization reaction was carried out in the same manner as in Example 1 to obtain an isoprene-acrylonitrile random copolymer, except that the polymerization reaction was carried out using the compounds shown in Table 1.

As a result of gas chromatography analysis, a conversion ratio of isoprene was 75%, a conversion ratio of acrylonitrile was 60%, and a yield of a Diels-Alder product of isoprene and acrylonitrile obtained as a by-product was 5%.

As a result of GPC analysis, the isoprene-acrylonitrile random copolymer had an Mw of 164,200, an Mn of 116,400, and an Mw/Mn of 1.41.

### [Example 3]

Polymerization reaction was carried out in the same manner as in Example 1 to obtain a 1,3-butadiene-acrylonitrile random copolymer, except that a 80 mL metal autoclave was used as a reactor and the polymerization reaction was carried out using the compounds shown in Table 1.

As a result of gas chromatography analysis, a conversion ratio of 1,3-butadiene was 75%, a conversion ratio of acrylonitrile was 54%, and a yield of a Diels-Alder product of 1,3-butadiene and acrylonitrile obtained as a by-product was 4%.

As a result of GPC analysis, the 1,3-butadiene-acrylonitrile random copolymer had an Mw of 203,300, an Mn of 123,200, and an Mw/Mn of 1.65.

### [Example 4]

Polymerization reaction was carried out in the same manner as in Example 1 to obtain an isoprene-acrylonitrile random copolymer, except that the polymerization reaction was carried out using the compounds shown in Table 1.

As a result of gas chromatography analysis, a conversion ratio of isoprene was 42%, a conversion ratio of acrylonitrile was 59%, and a yield of a Diels-Alder product of isoprene and acrylonitrile obtained as a by-product was 2%.

As a result of GPC analysis, the isoprene-acrylonitrile random copolymer had an Mw of 89,900, an Mn of 63,300, and an Mw/Mn of 1.42.

### [Example 5]

Polymerization reaction was carried out in the same manner as in Example 1 to obtain an isoprene-acrylonitrile random copolymer, except that the polymerization reaction was carried out using the compounds shown in Table 1.

As a result of gas chromatography analysis, a conversion ratio of isoprene was 63%, a conversion ratio of acrylonitrile was 40%, and a yield of a Diels-Alder product of isoprene and acrylonitrile obtained as a by-product was 5%.

As a result of GPC analysis, the isoprene-acrylonitrile random copolymer had an Mw of 168,700, an Mn of 92,700, and an Mw/Mn of 1.82.

### [Example 6]

Polymerization reaction was carried out in the same manner as in Example 1 to obtain an isoprene-acrylonitrile random copolymer, except that, after the radical polymerization initiator (1) was added, 0.009 part of dimethyl ditelluride obtained in Synthesis Example 6 was further added to carry out the polymerization reaction.

As a result of gas chromatography analysis, a conversion ratio of isoprene was 59%, a conversion ratio of acrylonitrile was 39%, and a yield of a Diels-Alder product of isoprene and acrylonitrile obtained as a by-product was 4%.

As a result of GPC analysis, the isoprene-acrylonitrile random copolymer had an Mw of 152,100, an Mn of 102,100, and an Mw/Mn of 1.49.

### [Example 7]

Polymerization reaction was carried out in the same manner as in Example 1 to obtain an isoprene-acrylonitrile random copolymer, except that the polymerization reaction was carried out using the compounds shown in Table 1.

As a result of gas chromatography analysis, a conversion ratio of isoprene was 65%, a conversion ratio of acrylonitrile was 43%, and a yield of a Diels-Alder product of isoprene and acrylonitrile obtained as a by-product was 4%.

As a result of GPC analysis, the isoprene-acrylonitrile random copolymer had an Mw of 175,300, an Mn of 108,900, and an Mw/Mn of 1.61.

### [Example 8]

Polymerization reaction was carried out in the same manner as in Example 1 to obtain an isoprene-acrylonitrile random copolymer, except that the polymerization reaction was carried out using the compounds shown in Table 1.

As a result of gas chromatography analysis, a conversion ratio of isoprene was 61%, a conversion ratio of acrylonitrile was 43%, and a yield of a Diels-Alder product of isoprene and acrylonitrile obtained as a by-product was 4%.

As a result of GPC analysis, the isoprene-acrylonitrile random copolymer had an Mw of 139,400, an Mn of 92,300, and an Mw/Mn of 1.51.

### [Example 9]

Polymerization reaction was carried out in the same manner as in Example 1 to obtain an isoprene-acrylonitrile random copolymer, except that the polymerization reaction was carried out using the compounds shown in Table 1 and the polymerization temperature was changed from 60°C to 55°C.

As a result of gas chromatography analysis, a conversion ratio of isoprene was 61%, a conversion ratio of acrylonitrile was 49%, and a yield of a Diels-Alder product of isoprene and acrylonitrile obtained as a by-product was 5%.

As a result of GPC analysis, the isoprene-acrylonitrile random copolymer had an Mw of 139,200, an Mn of 71,000, and an Mw/Mn of 1.96.

### [Example 10]

Polymerization reaction was carried out in the same manner as in Example 1 to obtain an isoprene-acrylonitrile random copolymer, except that the polymerization reaction was carried out using the compounds shown in Table 2.

As a result of gas chromatography analysis, a conversion ratio of isoprene was 60%, a conversion ratio of acrylonitrile was 55%, and a yield of a Diels-Alder product of isoprene and acrylonitrile obtained as a by-product was 6%.

As a result of GPC analysis, the isoprene-acrylonitrile random copolymer had an Mw of 117,500, an Mn of 68,300, and an Mw/Mn of 1.72.

### [Example 11]

2.0 parts of sodium dodecyl sulfate (manufactured by Tokyo Chemical Industry Co., Ltd.) and 216 parts of distilled water were put into an 80 mL glass reactor and mixed to obtain a surfactant aqueous solution. Subsequently, 0.027 part of radical generator (1), 3.3 parts of ethyl acrylate and 10 parts of mesitylene as an internal standard were added to this surfactant aqueous solution and stirred to prepare a monomer emulsion.

This monomer emulsion was sufficiently degassed by nitrogen bubbling, then 0.030 part of radical polymerization initiator (1) was added to this emulsion, which was stirred at 50°C for 7 hours for polymerization reaction.

Subsequently, to this polymerization solution, a mixture in which 0.027 part of radical generator (1), 56.2 parts of isoprene and 43.8 parts of acrylonitrile were mixed and sufficiently degassed by nitrogen bubbling was added, which was stirred at 60°C for 18 hours for polymerization reaction.

The polymerization solution was poured into methanol to precipitate a polymerization reaction product. The precipitate was taken by filtration and drying to obtain a block copolymer having an ethyl acrylate block and an isoprene-acrylonitrile random block.

As a result of gas chromatography analysis, a conversion ratio of ethyl acrylate was 99%, a conversion ratio of isoprene was 55%, a conversion ratio of acrylonitrile was 36%, and a yield of a Diels-Alder product of isoprene and acrylonitrile obtained as a by-product was 6%.

As a result of GPC analysis, the block copolymer had an Mw of 148,200, an Mn of 85,400, and an Mw/Mn of 1.74.

### [Example 12]

Polymerization reaction was carried out in the same manner as in Example 1 to obtain an isoprene-acrylonitrile random copolymer, except that the polymerization reaction was carried out using the compounds shown in Table 2.

As a result of gas chromatography analysis, a conversion ratio of isoprene was 85%, a conversion ratio of acrylonitrile was 79%, and a yield of a Diels-Alder product of isoprene and acrylonitrile obtained as a by-product was 3%.

As a result of GPC analysis, the isoprene-acrylonitrile random copolymer had an Mw of 17,600, an Mn of 12,400, and an Mw/Mn of 1.42.

### [Example 13]

Polymerization reaction was carried out in the same manner as in Example 1 to obtain an isoprene-butyl acrylate random copolymer, except that the polymerization reaction was carried out using the compounds shown in Table 2.

As a result of gas chromatography analysis, a conversion ratio of isoprene was 72%, a conversion ratio of butyl acrylate was 61%, and a yield of a Diels-Alder product of isoprene and butyl acrylate obtained as a by-product was 3%.

As a result of GPC analysis, the isoprene-butyl acrylate copolymer had an Mw of 13,500, an Mn of 9,800, and an Mw/Mn of 1.38.

### [Example 14]

Polymerization reaction was carried out in the same manner as in Example 1 to obtain an isoprene-styrene random copolymer, except that the polymerization reaction was carried out using the compounds shown in Table 2.

As a result of gas chromatography analysis, a conversion ratio of isoprene was 65%, a conversion ratio of styrene was 54%, and a yield of a Diels-Alder product of isoprene and styrene obtained as a by-product was lower than 1%.

As a result of GPC analysis, the isoprene-styrene copolymer had an Mw of 19,400, an Mn of 14,300, and an Mw/Mn of 1.36.

### [Example 15]

Polymerization reaction was carried out in the same manner as in Example 1 to obtain an isoprene-methyl methacrylate random copolymer, except that the polymerization reaction was carried out using the compounds shown in Table 2.

As a result of gas chromatography analysis, a conversion ratio of isoprene was 54%, a conversion ratio of methyl methacrylate was 42%, and a yield of a Diels-Alder product of isoprene and methyl methacrylate obtained as a by-product was lower than 1%.

As a result of GPC analysis, the isoprene-methyl methacrylate copolymer had an Mw of 19,000, an Mn of 13,200, and an Mw/Mn of 1.44.

### [Comparative Example 1]

0.027 part of radical generator (1), 56.2 parts of isoprene, 43.8 parts of acrylonitrile and 10 parts of mesitylene as an internal standard were added to an 80 mL glass reactor and stirred to prepare a monomer solution.

This monomer solution was sufficiently degassed by nitrogen bubbling, then 0.030 part of radical polymerization initiator (1) was added to this solution, which was stirred at 60°C for 24 hours for polymerization reaction.

A part of the polymerization solution was poured into methanol to precipitate a polymerization reaction product.

The precipitate was taken by filtration and drying to obtain an isoprene-acrylonitrile random copolymer.

As a result of gas chromatography analysis, a conversion ratio of isoprene was 24%, a conversion ratio of acrylonitrile was 24%, and a yield of a Diels-Alder product of isoprene and acrylonitrile obtained as a by-product was 12%.

As a result of GPC analysis, the isoprene-acrylonitrile random copolymer had an Mw of 15,600, an Mn of 11,200, and an Mw/Mn of 1.39.

In addition, when a period for polymerizing the remainder of the polymerization solution was further extended to 168 hours, a conversion ratio of isoprene was 62%, and a conversion ratio of acrylonitrile was 66%, but a yield of a Diels-Alder product of isoprene and acrylonitrile was 44%, and the isoprene-acrylonitrile random copolymer had an Mw of 48,300, an Mn of 38,200, and an Mw/Mn of 1.26.

**TABLE 1**

| | | | | Examples | | | | | | | | |
|---|---|---|---|---|---|---|---|---|---|---|---|---|
| | | | | 1 | 2 | 3 | 4 | 5 | 6 | 7 | 8 | 9 |
| | | Conjugated diene-based monomer | IP | 56.2 | 56.2 | - | 72.3 | 38.7 | 56.2 | 56.2 | 56.2 | 56.2 |
| | | | BD | - | - | 50.5 | - | - | - | - | - | - |
| | | Radically polymerizable monomer (α) | AN | 43.8 | 43.8 | 49.5 | 27.7 | 61.3 | 43.8 | 43.8 | 43.8 | 43.8 |
| | | | BA | - | - | - | - | - | - | - | - | - |
| | | | St | - | - | - | - | - | - | - | - | - |
| | | | MMA | - | - | - | - | - | - | - | - | - |
| | | | EA | - | - | - | - | - | - | - | - | - |
| | | Radically polymerizable initiator (1) | | 0.030 | - | 0.034 | 0.029 | 0.031 | 0.030 | - | - | 0.061 |
| First | Usage (parts) | Radically polymerizable initiator (2) | | - | - | - | - | - | - | 0.042 | - | - |
| polymerization | | Radically polymerizable initiator (3) | | - | - | - | - | - | - | - | 0.032 | - |
| reaction | | Radically polymerizable initiator (4) | | - | 0.456 | - | - | - | - | - | - | 0.456 |
| | | Radically polymerizable initiator (5) | | - | - | - | - | - | - | - | - | - |
| | | Radical generator (1) | | 0.027 | - | 0.030 | 0.026 | 0.028 | 0.027 | 0.027 | 0.027 | - |
| | | Radical generator (2) | | - | 0.041 | - | - | - | - | - | - | - |
| | | Radical generator (3) | | - | - | - | - | - | - | - | - | 0.015 |
| | | Dimethyl ditelluride | | - | - | - | - | - | 0.009 | - | - | - |
| | Reaction temperature (°C) | | | 60 | 60 | 60 | 60 | 60 | 60 | 60 | 60 | 55 |
| | Reaction period (h) | | | 18 | 18 | 18 | 18 | 18 | 18 | 18 | 18 | 18 |
| | Polymerization manner | | | Suspension | Emulsion | Suspension | Suspension | Suspension | Suspension | Suspension | Suspension | Emulsion |
| Second polymerization reaction | Usage (parts) | Conjugated diene-based monomer | IP | - | - | - | - | - | - | - | - | - |
| | | Radically polymerizable monomer (α) | AN | - | - | - | - | - | - | - | - | - |
| | | Radical generator (1) | | - | - | - | - | - | - | - | - | - |
| | Reaction temperature (°C) | | | - | - | - | - | - | - | - | - | - |
| | Reaction period (h) | | | - | - | - | - | - | - | - | - | - |
| | Polymerization manner | | | - | - | - | - | - | - | - | - | - |
| Conversion ratio of conjugated diene-based monomer | | | | 62% | 75% | 75% | 42% | 63% | 59% | 65% | 61% | 61% |
| Conversion ratio of radically polymerizable monomer (α) | | First polymerization reaction | | 40% | 60% | 54% | 59% | 40% | 39% | 43% | 43% | 49% |
| | | Second polymerization reaction | | - | - | - | - | - | - | - | - | - |
| Mn | | | | 94000 | 116400 | 123200 | 63300 | 92700 | 102100 | 108900 | 92300 | 71000 |
| Mw | | | | 146000 | 164200 | 203300 | 89900 | 168700 | 152100 | 175300 | 139400 | 139200 |
| Mw/Mn | | | | 1.55 | 1.41 | 1.65 | 1.42 | 1.82 | 1.49 | 1.61 | 1.51 | 1.96 |
| Yield of Diels-Alder product | | | | 4% | 5% | 4% | 2% | 5% | 4% | 4% | 4% | 5% |

**TABLE 2**

| | | | | Examples | | | | | | Comparative Example | |
|---|---|---|---|---|---|---|---|---|---|---|---|
| | | | | 10 | 11 | 12 | 13 | 14 | 15 | 1 | |
| | | Conjugated diene-based monomer | IP | 56.2 | - | 56.2 | 34.7 | 39.6 | 40.5 | 56.2 | |
| | | | BD | - | - | - | - | - | - | - | |
| | | Radically polymerizable monomer (α) | AN | 43.8 | - | 43.8 | - | - | - | 43.8 | |
| | | | BA | - | - | - | 65.3 | - | - | - | |
| | | | St | - | - | - | - | 60.4 | - | - | |
| | | | MMA | - | - | - | - | - | 59.5 | - | |
| | | | EA | - | 3.3 | - | - | - | - | - | |
| | | Radically polymerizable initiator (1) | | - | 0.030 | 1.52 | 1.52 | 1.52 | 1.52 | 0.030- | |
| First | Usage (parts) | Radically polymerizable initiator (2) | | - | - | - | - | - | - | - | |
| polymerization | | Radically polymerizable initiator (3) | | - | - | - | - | - | - | - | |
| reaction | | Radically polymerizable initiator (4) | | - | - | - | - | - | - | - | |
| | | Radically polymerizable initiator (5) | | 0.381 | - | - | - | - | - | - | |
| | | Radical generator (1) | | - | 0.027 | 1.35 | 1.35 | 1.35 | 1.35 | 0.027 | |
| | | Radical generator (2) | | 0.041 | - | - | - | - | - | - | |
| | | Radical generator (3) | | - | - | - | - | - | - | - | |
| | | Dimethyl ditelluride | | - | - | - | - | - | - | - | |
| | Reaction temperature (°C) | | | 60 | 50 | 60 | 60 | 60 | 60 | 60 | 60 |
| | Reaction period (h) | | | 18 | 7 | 18 | 18 | 18 | 18 | 24 | 168 |
| | Polymerization manner | | | Emulsion | Suspension | Suspension | Suspension | Suspension | Suspension | Bulk | |
| Second polymerization reaction | Usage (parts) | Conjugated diene-based monomer | IP | - | 56.2 | - | - | - | - | - | - |
| | | Radically polymerizable monomer (α) | AN | - | 43.8 | - | - | - | - | - | - |
| | | Radical generator (1) | | - | 0.027 | - | - | - | - | - | - |
| | Reaction temperature (°C) | | | - | 60 | - | - | - | - | - | - |
| | Reaction period (h) | | | - | 18 | - | - | - | - | - | - |
| | Polymerization manner | | | - | Suspension | - | - | - | - | - | - |
| Conversion ratio of conjugated diene-based monomer | | | | 60% | 55% | 85% | 72% | 65% | 54% | 24% | 62% |
| Conversion ratio of radically polymerizable monomer (α) | | First polymerization reaction | | 55% | 99% | 79% | 61% | 54% | 42% | 24% | 66% |
| | | Second polymerization reaction | | - | 36% | - | - | - | - | - | - |
| Mn | | | | 68300 | 85400 | 12400 | 9800 | 14300 | 13200 | 11200 | 38200 |
| Mw | | | | 117500 | 148200 | 17600 | 13500 | 19400 | 19000 | 15600 | 48300 |
| Mw/Mn | | | | 1.72 | 1.74 | 1.42 | 1.38 | 1.36 | 1.44 | 1.39 | 1.26 |
| Yield of Diels-Alder product | | | | 6% | 6% | 3% | 3% | <1% | <1% | 12% | 44% |

The followings can be found from Table 1 and Table 2.

In Examples 1 to 15, the amounts of the by-products by Diels-Alder reaction are suppressed by the copolymerization reaction (suspension polymerization or emulsion polymerization) between the conjugated diene-based monomer and the radically polymerizable monomer (α).

On the other hand, in Comparative Example 1, wherein the copolymerization reaction between the conjugated diene-based monomer and the radically polymerizable monomer (α) has been carried out by bulk polymerization, the conversion ratios of the conjugated diene-based monomer and the radically polymerizable monomer (α) are low in the case of the reaction period of 24 hours.

In addition, as a result of extending this reaction period to 168 hours, the conversion ratios of the conjugated diene-based monomer and the radically polymerizable monomer (α) are higher, but a large amount of by-products by Diels-Alder reaction are generated.

## Claims

1. A method for producing a copolymer having a repeating unit derived from a conjugated diene-based monomer and using a radical polymerization initiator and a radical generator,
wherein the radical polymerization initiator is a compound represented by formula (1): 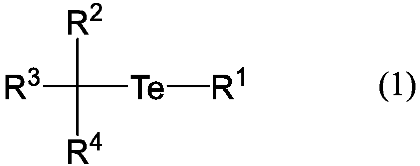 (wherein R¹ represents an alkyl group, an unsubstituted or substituted aryl group or an unsubstituted or substituted aromatic heterocyclic group. Each of R² and R³ independently represents a hydrogen atom or an alkyl group. R⁴ represents an unsubstituted or substituted vinyl group, an unsubstituted or substituted aryl group, an unsubstituted or substituted aromatic heterocyclic group, an acyl group, a hydrocarbyloxycarbonyl group, or a cyano group.),
and wherein emulsion polymerization or suspension polymerization between the conjugated diene-based monomer and a radically polymerizable monomer other than conjugated diene-based monomers is carried out.

2. The method for producing the copolymer according to claim 1, having the repeating unit derived from the conjugated diene-based monomer and using the radical polymerization initiator and the radical generator,
wherein the radical polymerization initiator is the compound represented by formula (1),
and wherein emulsion polymerization or suspension polymerization of the radically polymerizable monomer other than conjugated diene-based monomers is carried out, and then emulsion polymerization or suspension polymerization between the conjugated diene-based monomer and the radically polymerizable monomer other than conjugated diene-based monomers is carried out in the reaction system.

3. A method for producing a copolymer having a repeating unit derived from a conjugated diene-based monomer and using a macroradical polymerization initiator and a radical generator,
wherein the macroradical polymerization initiator is a compound represented by formula (2): 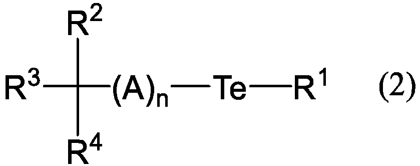 (wherein R¹ represents an alkyl group, an unsubstituted or substituted aryl group or an unsubstituted or substituted aromatic heterocyclic group. Each of R² and R³ independently represents a hydrogen atom or an alkyl group. R⁴ represents an unsubstituted or substituted vinyl group, an unsubstituted or substituted aryl group, an unsubstituted or substituted aromatic heterocyclic group, an acyl group, a hydrocarbyloxycarbonyl group, or a cyano group. A represents a repeating unit derived from a hydrophilic monomer. n represents an integer of 1 to 100),
and wherein emulsion polymerization or suspension polymerization between the conjugated diene-based monomer and the radically polymerizable monomer other than conjugated diene-based monomers is carried out.

4. The method for producing the copolymer according to claim 3, having the repeating unit derived from the conjugated diene-based monomer and using the macroradical polymerization initiator and the radical generator,
wherein the macroradical polymerization initiator is the compound represented by formula (2),
and wherein emulsion polymerization or suspension polymerization of the radically polymerizable monomer other than conjugated diene-based monomers is carried out, and then, emulsion polymerization or suspension polymerization between the conjugated diene-based monomer and the radically polymerizable monomer other than conjugated diene-based monomers is carried out in the reaction system.

5. The method for producing the copolymer according to claim 3 or 4, wherein the macroradical polymerization initiator represented by formula (2) is obtained by reacting a hydrophilic monomer with a compound represented by formula (1): 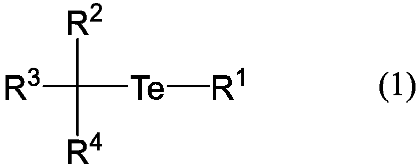 (wherein R¹ represents an alkyl group, an unsubstituted or substituted aryl group or an unsubstituted or substituted aromatic heterocyclic group. Each of R² and R³ independently represents a hydrogen atom or an alkyl group. R⁴ represents an unsubstituted or substituted vinyl group, an unsubstituted or substituted aryl group, an unsubstituted or substituted aromatic heterocyclic group, an acyl group, a hydrocarbyloxycarbonyl group, or a cyano group.).

6. The method for producing the copolymer according to any one of claims 1 to 5, wherein the polymerization reaction system further includes a ditelluride compound represented by formula (3):
**R⁵-Te-Te-R⁶** **(3)**
(wherein each of R⁵ and R⁶ independently represents an alkyl group, an unsubstituted or substituted aryl group or an unsubstituted or substituted aromatic heterocyclic group.).

7. A method for producing a latex in which a copolymer particle is dispersed in water,
wherein the copolymer having the repeating unit derived from the conjugated diene-based monomer is synthesized by the method according to any one of claims 1 to 6.
